(19) Europäisches Patentamt / European Patent Office / Office européen des brevets

(11) **EP 4 441 807 B1**

(12) **EUROPEAN PATENT SPECIFICATION**

(45) Date of publication and mention
of the grant of the patent:
**13.05.2026  Bulletin 2026/20**

(21) Application number: **22826095.6**

(22) Date of filing: **01.12.2022**

(51) International Patent Classification (IPC):
$H01M\ 10/0525$ (2010.01)     $H01M\ 10/0562$ (2010.01)
$H01M\ 4/1391$ (2010.01)     $H01M\ 4/36$ (2006.01)
$H01M\ 4/525$ (2010.01)     $H01M\ 4/131$ (2010.01)

(52) Cooperative Patent Classification (CPC):
H01M 4/131; H01M 4/1391; H01M 4/366;
H01M 4/525; H01M 10/0525; H01M 10/0562;
Y02E 60/10

(86) International application number:
**PCT/EP2022/084000**

(87) International publication number:
**WO 2023/099646 (08.06.2023 Gazette 2023/23)**

(54) **COATED PARTICULATE MATERIAL FOR USE IN AN ELECTRODE OF AN ELECTROCHEMICAL CELL**

BESCHICHTETES TEILCHENFÖRMIGES MATERIAL ZUR VERWENDUNG IN EINER ELEKTRODE EINER ELEKTROCHEMISCHEN ZELLE

MATÉRIAU PARTICULAIRE REVÊTU POUR UNE UTILISATION DANS UNE ÉLECTRODE D'UNE CELLULE ÉLECTROCHIMIQUE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **02.12.2021  EP 21212091**

(43) Date of publication of application:
**09.10.2024  Bulletin 2024/41**

(73) Proprietors:
• **BASF SE**
  **67056 Ludwigshafen am Rhein (DE)**
• **Karlsruher Institut für Technologie**
  **76131 Karlsruhe (DE)**

(72) Inventors:
• **KITSCHE, David**
  **76344 Eggenstein-Leopoldshafen (DE)**
• **STRAUSS, Florian**
  **76344 Eggenstein-Leopoldshafen (DE)**
• **BREZESINSKI, Torsten**
  **76344 Eggenstein-Leopoldshafen (DE)**
• **KONDRAKOV, Aleksandr**
  **67056 Ludwigshafen (DE)**

(74) Representative: **BASF IP Association**
  **BASF SE**
  **GBI - Z078**
  **67056 Ludwigshafen (DE)**

(56) References cited:
EP-A1- 3 872 902        WO-A1-2020/249659
JP-A- 2017 100 893      US-A1- 2016 260 965
US-A1- 2020 388 841

**Description**

Described are a coated particulate material for use in an electrode of an electrochemical cell and a process for preparing said coated particulate material, an electrode comprising said coated particulate material, an electrochemical cell comprising said coated particulate material, and a use of said coated particulate material for preparing an electrode for use in an electrochemical cell.

High energy density all-solid-state batteries may be realized through application of electrode active materials having a redox potential of 4 V or more vs. $Li^+/Li$ (cathode active material of the "4 V class"), so that a high cell voltage is obtainable. However, such cathode active materials may be incompatible with typical lithium ion-conducting solid electrolyte materials used for all-solid-state batteries, because the cathode active material may act as an oxidizing agent towards the solid electrolyte present in the cathode and/or in the separator layer.

To solve this problem, it was proposed to apply a coating to the cathode active material which serves as a protection layer protecting the solid electrolyte from being oxidized by the cathode active material, without inhibiting the transfer of lithium ions between the cathode active material and the solid electrolyte.

WO 2020/249659 A1 discloses a coated particulate material for use as electrode active material in an electrode and/or in a solid-state lithium-ion electrochemical cell, said coted particulate material comprising a plurality of core particles, each core particle comprising at least one nickel-containing complex layered oxide, and disposed on the surfaces of the core particles, a coating comprising carbonate ions, lithium and at least one further element. WO 2020/249659 A1 also discloses an electrode for use in a solid-state or lithium-ion electrochemical cell and a respective electrochemical cell, said electrode comprising said coated particulate material. Said coating comprises carbonate anions, lithium and at least one member of the group consisting of aluminium, boron, niobium, phosphorus, silicon, tantalum, titanium, zinc, zirconium and mixtures thereof. The at least one member of the group consisting of aluminum, boron, niobium, phosphorus, silicon, tantalum, titanium, zinc, zirconium and mixtures thereof may be present as a part of one or more compounds selected from the group consisting of $LiNbO_3$, $Li_2ZrO_3$, $LiTaO_3$, $Li_3PO_4$, $Li_3BO_3$, $LiAlO_2$, $Li_6ZnNb_4O_{14}$ and $Zn_3(PO_4)_2$. No example is provided for a coating comprising $Li_6ZnNb_4O_{14}$. Moreover, no example is provided how to obtain a coating wherein both, zinc and niobium, are present. In contrast, all exemplary coatings disclosed in WO 2020/249659 A1 contain niobium, and no further member of the group consisting of aluminium, boron, phosphorus, silicon, tantalum, titanium, zinc, and zirconium is present.

Related art is also US 2020/0388841 A1.

Although application of a coating containing $Li_3NbO_4$ or $LiNbO_3$ to the cathode active material was found to have an advantageous effect on the initial discharge capacity as well as on the cycling performance and stability, further improvement, i.e. increase of the initial capacity as well as reduction of the capacity loss during cycling, is desirable.

According to a first aspect, there is provided a coated particulate material, comprising or consisting of

C1) a plurality of core particles, each core particle comprising or consisting of one or more compounds of formula (I):

$$Li_{1+t}[Co_xMn_yNi_zM_u]_{1-t}O_2 \qquad (I)$$

wherein

$$0 \leq x \leq 1$$

$$0 \leq y \leq 1$$

$$0 \leq z \leq 1$$

$$0 \leq u \leq 0.15$$

M if present is one or more elements selected from the group consisting of Al, Mg, Ba, B, and transition metals other than Ni, Co, and Mn,

$$x + y + z > 0$$

$$x + y + z + u = 1$$

$$0 \leq t \leq 0.2$$

and

C2) disposed on the surfaces of the core particles, a coating comprising

- carbonate anions,
- lithium cations, and
- niobium and zinc in oxidized form, wherein at least a part of the niobium is present as cubic $Li_3NbO_4$ having a crystallographic unit cell of space group *Fm-3m*.
wherein preferably

- the fraction of Zn is in the range of from 0.07 mass-% to 0.1 mass-%
- the fraction of Nb is in the range of from 0.4 mass-% to 0.6 mass-%
- the coating comprises carbonate anions in a total amount in the range of from 0.08 mass-% to 1.62 mass-%

in each case relative to the total mass of the plurality of core particles

- the molar ratio of Li:Nb in the coating is in the range of from 0.5 to 5.0.

Compounds of formula (I) are capable of acting as a cathode active material in an electrochemical cell. In the context of the present disclosure, the electrode of an electrochemical cell where during discharging of the cell a net positive charge occurs is called the cathode, and the component of the cathode by reduction of which said net positive charge is generated is referred to as a "cathode active material".

Preferably, each core particle C1) consists of at least one compound of formula (I).

Preferred cathode active materials are those having a redox potential of 4 V or more vs. $Li^+/Li$ (cathode active materials of the "4 V class"), which enable obtaining a high cell voltage. Many such cathode active materials are known in the art.

Suitable cathode active materials are oxides comprising lithium, and one or more members of the group consisting of nickel, cobalt and manganese.

According to the invention, the cathode active material present in the cores of the coated particulate material is selected from the group consisting of materials having a composition according to general formula (I)

$$Li_{1+t}[Co_xMn_yNi_zM_u]_{1-t}O_2 \qquad (I)$$

wherein

$$0 \leq x \leq 1$$

$$0 \leq y \leq 1$$

$$0 \leq z \leq 1$$

$$0 \leq u \leq 0.15$$

M if present is one or more elements selected from the group consisting of Al, Mg, Ba, B, and transition metals other than Ni, Co, and Mn,

$$x + y + z > 0$$

$$x + y + z + u = 1$$

$$0 \leq t \leq 0.2.$$

In certain cathode active materials according to formula (I), M may be one of Al, Mg, Ti, Mo, Nb, W and Zr. Exemplary cathode active materials of formula (I) are $Li_{1+t}[Ni_{0.88}Co_{0.08}Al_{0.04}]_{1-t}O_2$, $Li_{1+t}[Ni_{0.905}Co_{0.0475}Al_{0.0475}]_{1-t}O_2$, and $Li_{1+t}[Ni_{0.91}Co_{0.045}Al_{0.045}]_{1-t}O_2$, wherein in each case $0 \leq t \leq 0.2$.

Suitable cathode active materials are e.g. oxides comprising lithium and one or more members of the group consisting of nickel, cobalt and manganese. Those cathode active materials have a composition according to general

formula (Ia):

$$Li_{1+t}[Co_xMn_yNi_z]_{1-t}O_2 \qquad (Ia)$$

wherein

$$0 \leq x \leq 1$$

$$0 \leq y \leq 1$$

$$0 \leq z \leq 1$$

$$x + y + z = 1$$

$$0 \leq t \leq 0.2.$$

Preferably, the cathode active material according to general formula (Ia) is a mixed oxide of lithium and at least one of nickel and manganese. More preferably, the cathode active material is a mixed oxide of lithium, nickel and one or both members of the group consisting of cobalt and manganese.

Exemplary cathode active materials according to formula (Ia) are $LiCoO_2$, $Li_{1+t}[Ni_{0.85}Co_{0.10}Mn_{0.05}]_{1-t}O_2$, $Li_{1+t}[Ni_{0.87}Co_{0.05}Mn_{0.08}]_{1-t}O_2$, $Li_{1+t}[Ni_{0.83}Co_{0.12}Mn_{0.05}]_{1-t}O_2$, and $Li_{1+t}[Ni_{0.6}Co_{0.2}Mn_{0.2}]_{1-t}O_2$, wherein in each case $0 \leq t \leq 0.2$.

Certain suitable cathode active materials are mixed oxides comprising

-   lithium,

-   nickel and

-   one or both members of the group consisting of cobalt and manganese.

Exemplary suitable cathode active materials have a composition according to general formula (Ib):

$$Li_{1+t}A_{1-t}O_2 \qquad (Ib),$$

wherein

$$0 \leq t \leq 0.2$$

A   comprises nickel

and one or both members of the group consisting of cobalt and manganese,
and optionally

-   one or more further transition metals not selected from the group consisting of nickel, cobalt and manganese, wherein said further transition metals are preferably selected from the group consisting of molybdenum, titanium, tungsten, zirconium,

-   one or more elements selected from the group consisting of aluminum, barium, boron and magnesium,

wherein at least 50 mole-% of the transition metal of A is nickel.

Suitable cathode active materials having a composition according to formula (Ib) are described e.g. in WO 2020/249659 A1.

The cathode active material having a composition according to general formula (I), especially according to general formula (Ib), may have a layered structure or a spinel structure. Cathode active materials having a composition according to general formula (Ib) which have a layered structure as described in WO 2020/249659 A1 may be preferable in some cases.

Certain preferred cathode active materials have a composition according to general formula (Ic)

$$Li_{1+t}[Ni_{1-u-v-w}Co_uMn_vM_w]_{1-t}O_2 \qquad (Ic)$$

wherein

M   is a member of the group consisting of aluminum, barium, boron, magnesium, molybdenum, titanium, tungsten, zirconium, and mixtures of at least two of the foregoing elements, preferably M is or comprises aluminum (most preferably when v is 0),

t   is a number in the range of from 0 to 0.2,

u   is a number in the range of from 0.04 to 0.2,

v   is a number in the range of from 0 to 0.2, preferably of from 0.04 to 0.2,

w   is a number in the range of from 0 to 0.1

and (u + v + w) is $\leq$ 0.4 and preferably is $\leq$ 0.3.

In formula (Ic), the variable "M" can stand for any individual member of the group of elements as defined above (e.g. "M" can stand for tungsten, i.e. "W") or it can stand for two or more members of the group of elements as defined above (e.g. the "M" can stand for a group consisting of tungsten, zirconium and titanium). Where "M" stands for two or more members of the group of elements as defined above, the index (number) "w" accompanying the variable "M" applies to the total of elements represented by "M", as defined above.

Exemplary cathode active materials of formula (Ic) are $Li_{1+t}[Ni_{0.85}Co_{0.10}Mn_{0.05}]_{1-t}O_2$, $Li_{1+t}[Ni_{0.87}Co_{0.05}Mn_{0.08}]_{1-t}O_2$, $Li_{1+t}[Ni_{0.83}Co_{0.12}Mn_{0.05}]_{1-t}O_2$, $Li_{1+t}[Ni_{0.6}Co_{0.2}Mn_{0.2}]_{1-t}O_2$, $Li_{1+t}[Ni_{0.88}Co_{0.08}Al_{0.04}]_{1-t}O_2$, $Li_{1+t}[Ni_{0.905}Co_{0.0475}Al_{0.0475}]_{1-t}O_2$, and $Li_{1+t}[Ni_{0.91}Co_{0.045}Al_{0.045}]_{1-t}O_2$, wherein in each case $0 \leq t \leq 0.2$.

In the coated particulate material as described herein, the coating C2) comprises

- carbonate anions,

- lithium cations, and

- niobium and zinc in oxidized form, wherein at least a part of the niobium is present as cubic $Li_3NbO_4$ having a crystallographic unit cell of space group *Fm-3m.*

Cubic $Li_3NbO_4$ has a rock-salt structure.

The coating comprises at least one crystalline phase comprising cubic $Li_3NbO_4$ having a crystallographic unit cell of space group *Fm-3m,* as determined by nano-beam electron diffraction.

Preferably, less than 10 % of the niobium present in the coatings is present in the form of $Li_6ZnNb_4O_{14}$, further preferably less than 5 %, more preferably less than 1 % of the niobium present in the coatings is present in the form of $Li_6ZnNb_4O_{14}$. Most preferably, the monoclinic phase $Li_6ZnNb_4O_{14}$ is not present in the coated particulate material.

In the coated particulate material described herein, the molar ratio Nb:Zn is in the range of from 3 to 5, preferably in the range of from 4.1 to 5.

In the coating C2), Zn is present in the form of $Zn^{2+}$ cations or in the form of oxo- or hydroxo-anions (zincate anions).

In the coating C2), at least a part of the zinc may be present in a compound having a composition derived from the parent composition $Li_3NbO_4$ or $LiNbO_3$, wherein Li and/or Nb are partially substituted by Zn. Without wishing to be bound by any theory, it may presently be assumed that a compound having a composition derived from the parent composition $Li_3NbO_4$ wherein Li and/or Nb are partially substituted by Zn may be described by the following general formula (II):

$$Li_{(3-2a)}Zn_{(a+b)}Nb_{(1-0.4b)}O_4 \qquad (II)$$

wherein

$$0 \leq a < 1.5$$

$$0 \leq b < 0.25$$

$$0 < (a+b) < 1.75.$$

A compound of formula (II) may be considered as a Zn-doped $Li_3NbO_4$.

In the coated particulate material described herein

- the fraction of Zn may be in the range of from 0.07 mass-% to 0.1 mass-%

  and/or

- the fraction of Nb may be in the range of from 0.4 mass-% to 0.6 mass-%

in each case relative to the total mass of the plurality of core particles.

Preferably, in the coated particulate material described herein

the fraction of Zn is in the range of from 0.07 mass-% to 0.2 mass-%, preferably 0.07 mass-% to 0.1 mass-% and

- the fraction of Nb is in the range of from 0.35 mass-% to 0.6 mass%, preferably 0.4 mass-% to 0.6 mass-%

in each case relative to the total mass of the plurality of core particles.

The mass fractions of Li, Zn and Nb may be determined by means of inductively coupled plasma-optical emission spectroscopy (ICP-OES). Said analytical technique is known in the art.

In cases where Nb is present not only in coating C2), but also the core particles C1), the amount of Nb present in the coating C2) is preferably determined by comparing the measuring results from (i) measuring (determining) the amount of Nb in the core particles C1) of a sample of said core particles C1) before coating and (ii) measuring (determining) the amount of Nb present in the same sample of after coating. The same approach is used for determining the amount of Li in the coating C2), since Li is also present in the core C1).

Further preferably, in the coated particulate material described herein

- the fraction of Zn is in the range of from 0.07 mass-% to 0.2 mass-%, preferably 0.07 mass-% to 0.1 mass-%

  and

- the fraction of Nb is in the range of from 0.35 mass-% to 0.6 mass%, preferably 0.4 mass-% to 0.6 mass-%

in each case relative to the total mass of the plurality of core particles,

and the molar ratio Nb:Zn is in the range of from 3 to 5, preferably in the range of from 4.1 to 5.

The molar amount of Nb in the coating C2) per g of the plurality of core particles is preferably in the range of from 6 to 540 μmol/g, preferably of from 6 to 270 μmol/g, more preferably of from 6 to 108 μmol/g, relative to the total mass of the plurality of core particles.

In the coated particulate material as described herein, the coating C2) is disposed on the surfaces of at least a part of the core particles C1), preferably the coating C2) is disposed on the surfaces of > 50 % of the total number of core particles C1), more preferably on the surfaces of $\geq$ 75 % of the total number of core particles C1), even more preferably on the surfaces of $\geq$ 90 % of the total number of core particles C1) and yet even more preferably on the surfaces of $\geq$ 95 % of the total number of core particles C1) present in the coated particulate material. For the purposes of the present disclosure, the part of the core particles C1) on whose surfaces the coating C2) is disposed can be determined by electron microscopy performed on a (representative) sample of the coated particulate material.

In the coated particulate material as described herein, the coating C2) is disposed on at least a part of the surface of a (an individual) core particle C1), preferably the coating C2) is disposed on > 50 % of the total surface of a core particle C1), more preferably on $\geq$ 75 % of the total surface of a core particle C1) and even more preferably on $\geq$ 90 % of the total surface of a core particle C1). For the purposes of the present disclosure, the part of the surface of a core particle C1) on which the coating C2) is disposed can be determined by electron microscopy performed on a (representative) sample of an (individual) coated particle of the coated particulate material or a (representative) sample of the coated particulate material.

In the coated particulate material according to the first aspect described herein, the coating C2) may comprise carbonate anions in a total amount of $\geq$ 0.08 mass-% relative to the total mass of the plurality of (uncoated) core particles C1). More specifically, the coating C2) may comprise carbonate anions in a total amount in the range of from 0.08 mass-% to 1.62 mass-%, preferably of from 0.122 mass-% to 1.22 mass-%, more preferably of from 0.162 mass-% to 0.812 mass-

%, relative to the total mass of the plurality of (uncoated) core particles C1). If the content of lithium carbonate in the coating C2) is too high, the lithium ion conductivity may be decreased.

Without wishing to be bound by any theory, it is presently assumed that the carbonate present on the surface of the core particles C1) originates from unavoidable impurities of the cathode active material which may be formed when the cathode active material is prepared or stored in the presence of traces of carbon dioxide and humidity, and/or in certain cases from using lithium carbonate as a precursor for the synthesis of the cathode active material, and/or from the decomposition of the organic solvent of the liquid reaction mixture used in preparing the coated particulate material (for details see below) in air resp. oxygen and reactivity with residual lithium on the particle surface of the cathode active material.

In the coated particulate material according to the first aspect described herein, at least a part of the carbonate ions present in the coating C2) may be present as part of an ionic compound, e.g. as part of a salt. Herein, at least a part of the carbonate ions present in the coating C2), preferably the total amount of carbonate ions present in the coating C2), is present as lithium carbonate.

For the purposes of the present disclosure, the amount of carbonate ions present in the coating C2) may be determined by acid titration, coupled with mass spectroscopy, more preferably according to the method as defined in the examples section of WO 2020/249659 A1 performed on a (representative) sample of the coated particulate material.

In the coated particulate material, the lithium present in the coating C2) is preferably present as part

- of cubic $Li_3NbO_4$ having a crystallographic unit cell of space group *Fm-3m*

- of one or more compounds having a composition derived from the parent composition $Li_3NbO_4$ or $LiNbO_3$, wherein Li and/or Nb are partially substituted by Zn

- and of lithium carbonate ($Li_2CO_3$).

The molar ratio of Li:Nb in the coating C2) is preferably in the range of from 0.5 to 5.0, preferably of from 0.75 to 4.5, more preferably of from 1.0 to 4.0, more preferably 1.1 to 1.6.

In the coating C2), nanocrystals of cubic $Li_3NbO_4$ may be embedded in a matrix formed of lithium carbonate.

Lithium carbonate may be present in a crystalline phase and in an amorphous phase. At least one of a crystalline and an amorphous phase comprising lithium carbonate is present in the coatings C2) of the coated particles.

The coating C2) may comprise lithium carbonate in a total amount in the range of from 0.1 mass-% to 2.0 mass-%, more preferably of from 0.15 mass-% to 1.5 mass-%, yet more preferably of from ≥ 0.15 mass-% to 1.0 mass-%, relative to the total mass of the plurality of core particles. The total mass (or molar amount) of lithium carbonate in the coating C2) is preferably determined (calculated) as follows: first, the molar amount (or mass) of carbonate anions present in the coating C2) is determined by acid titration, coupled with mass spectroscopy, as explained above. It is next assumed for calculation purposes of the present invention that the total molar amount (or mass) of carbonate ions found in the coating C2) is solely present as $Li_2CO_3$.

According to a second aspect, there is provided a process for preparing a coated particulate material according to the first aspect as described above. Said process comprises the steps

P1)    preparing or providing a plurality of core particles C1) as defined above

P2)    preparing or providing a liquid composition comprising a solvent and, at least partially dissolved in said solvent, lithium ions,

P3)    preparing or providing a liquid composition comprising an organic solvent and, at least partially dissolved in said organic solvent, zinc ions, and a liquid composition comprising an organic solvent and, at least partially dissolved in said organic solvent, niobium ions, or a liquid composition comprising an organic solvent and, at least partially dissolved in said organic solvent, zinc ions and niobium ions,

P4)    contacting the components prepared or provided in steps P1) to P3) with each other, so that a reaction mixture results,

P5)    removing the solvents from the reaction mixture resulting from step P4), so that a solid residue results,

P6)    heat-treating the solid residue resulting from step P5) at a temperature in the range of from 100 °C to 600 °C, preferably of from 250 °C to 550 °C, so that a coated particulate material according to the first aspect as defined above results.

Methods for preparing core particles C1) comprising at least one cathode active material (step P1)), preferably consisting of at least one cathode active material, are known in the art. Core particles C1) comprising or consisting of at least one cathode active material are commercially available. Regarding preferred and specific cathode active materials, reference is made to the disclosure provided above in the context of the coated particulate material according to the first aspect. For the sake of reducing the amount of residual surface carbonates, step P1) may include a heat treatment of the core particles C1). Heat treatment of the core particles C1) may be performed at a temperature in the range of from 700 to 800 °C. Heat treatment of the core particles C1) may be performed in the presence of an oxygen flow.

The liquid compositions provided in steps P2) and P3) comprise precursors for the coating C2).

In step P2) the liquid composition comprising lithium ions may be prepared by dissolving lithium metal in a solvent selected from the group consisting of water, ethanol, methanol, isopropanol, butanol, acetone, tetrahydrofuran (THF) and N,N-dimethylformamid (DMF) and mixtures thereof. The preferred solvent is anhydrous ethanol.

In step P3)

- either

  - a first liquid composition comprising an organic solvent and, at least partially dissolved in said organic solvent, zinc ions,

  - and a second liquid composition comprising an organic solvent and, at least partially dissolved in said organic solvent, niobium ions,

- or a single liquid composition comprising an organic solvent and, at least partially dissolved in said organic solvent, zinc ions and niobium ions,

are provided. Said liquid compositions are prepared by dissolving one or both of (i) a niobium precursor selected from the group consisting of niobium alkoxides and niobium nitrate and (ii) a zinc precursor selected from the group of zinc alkoxides, zinc acetate and zinc nitrate in a solvent selected from the group consisting of ethanol, methanol, isopropanol, butanol, acetone, tetrahydrofuran (THF) and N,N-dimethylformamid (DMF), and mixtures thereof. The preferred solvent is anhydrous ethanol. A preferred niobium precursor is niobium ethoxide. A preferred zinc precursor is zinc acetate.

The molar ratio Nb:Zn as provided in step P3) is preferably in the range of from 3 to 5, more preferably in the range of from 4.1 to 5.

The molar ratio of Li provided in step P2) relative to Nb provided in step P3) is preferably in the range of from 0.5 to 5.0, preferably of from 0.75 to 4.5, more preferably of from 1.0 to 4.0.

In step P4) of the process according to the second aspect described herein, the components prepared or provided in steps P1) to P3) can be contacted with each other by means of any suitable technique, e.g. by mixing the components, and/or by spraying the liquid compositions prepared or provided in steps P2) and P3) or a mixture thereof onto the core particles C1) prepared or provided in step P1). For enhanced or completed contact, e.g. for finalizing the preparation of a reaction mixture e.g. in the form of a dispersion or a gel, sonicating may be used, preferably at a temperature in the range of from 15 °C to 30 °C and for a time period in the range of from 15 min to 60 min. Thus, in step P4) contacting may comprise preparation of a dispersion comprising the particles prepared or provided in step P1) and a mixture of the liquid compositions prepared or provided in steps P2) and P3), followed by ultrasonic treatment of said dispersion. Before adding the core particles C1) prepared or provided in step P1), a mixture of the solutions prepared or provided in steps P2) and P3) may be formed.

In the reaction mixture resulting in step P4), the molar ratio Nb:Zn as provided in step P3) is preferably in the range of from 3 to 5, more preferably in the range of from 4.1 to 5, and the molar ratio of Li:Nb is preferably in the range of from 0.5 to 5.0, preferably of from 0.75 to 4.5, more preferably of from 1.0 to 4.0.

Preferably, steps P1) to P4) are carried out under protective gas atmosphere (e.g. argon or nitrogen).

In step P5) removal of the solvents of the liquid reaction mixture (as prepared in step (i)) is preferably achieved by subjecting the solution to a reduced pressure (relative to standard pressure 101.325 kPa) at a temperature in the range of from 0 °C to 100 °C, preferably of from 20 °C to 40 °C.

In step P6) heat treating the solid residue may comprise calcining the solid residue. Heat treatment in step P6) may be carried out in the presence of oxygen flow. Most preferably, heat treatment is carried out in a temperature range of from 450 °C to 550 °C.

In step P6), the solid residue may be ground prior to the heat treatment.

In step P6), after removal of the solvents, heat treatment is performed for a duration of 1 to 12 hours, preferably 1 to 6 hours, more preferably 2 to 4 hours, at a temperature in the range of from 200 °C up to 600 °C, preferably 250 °C to 550 °C, most preferably in the range of from 450 °C to 550 °C.

Surprisingly it has been found that the monoclinic phase $Li_6ZnNb_4O_{14}$ is substantially not obtained by the process according to the second aspect, despite the molar ratio Nb:Zn may be close to 4:1.

According to a third aspect, there is provided an electrode for use in an electrochemical cell, especially in an all-solid-state lithium-ion electrochemical cell. Said electrode comprises

E1)   a coated particulate material according to the first aspect as defined above, preferably in a total amount of from 50 mass-% to 99 mass-%, more preferably of from 70 mass-% to 97 mass-%, relative to the total mass of the electrode,

E2)   a lithium ion-conducting solid electrolyte material, preferably in a total amount of from 1 mass-% to 50 mass-%, more preferably of from 3 mass-% to 30 mass-%, relative to the total mass of the electrode,

E3)   optionally electron-conductive carbon,

E4)   optionally one or more binding agents.

In the electrode according to the third aspect, a coated particulate material E1) according to the first aspect as disclosed above or provided by a process according to the second aspect as disclosed above and a solid electrolyte material E2) and optionally further constituents E3) and E4) as defined above may be admixed with each other.

The disclosure regarding coated particulate materials provided above in the context of the first and second aspect applies mutatis mutandis to the electrode according to the third aspect. Regarding preferred and specific coated particulate materials, reference is made to the disclosure provided above in the context of the coated particulate material according to the first aspect.

Typically, an electrode according to the third aspect as described herein is a cathode, i.e. the electrode of an electrochemical cell where during discharging of the cell a net positive charge occurs.

In the electrode according to the third aspect described herein, the coating C2) serves the purpose of facilitating the transfer of lithium ions between (i) the cathode active material (which is present in the cores C1) of the coated particulate material) and (ii) the solid electrolyte E2). Moreover, in case that the cathode active material has a redox potential of 4 V or more vs. $Li^+/Li$ (cathode active material of the "4 V class") and the solid electrolyte does not have electrochemical oxidation stability up to 4 V vs $Li^+/Li$, the coating C2) serves as a protection layer protecting the solid electrolyte E2) from being oxidized by the cathode active material.

Suitable solid electrolyte materials which are capable of conducting lithium ions are known in the art. For instance, the solid electrolyte E2) may be selected from the group consisting of lithium-containing sulfides, lithium-containing oxysulfides, lithium-containing oxyphosphates, lithium-containing thiophosphates, lithium argyrodites, lithium transition metal halides, and lithium-containing oxyphosphonitrides. Herein, the term "lithium-containing" means that lithium cations are present in the electrolyte, but cations of other metals than lithium may also be present in the chemical compound forming the solid electrolyte.

Such solid electrolytes have superior lithium ion conductivity but in some cases may be prone for being oxidized by the cathode active material, especially in case of cathode active materials of the 4 V class. In an electrode according to the third aspect, the coating C2) serves as a protection layer protecting the solid electrolyte E2) from being oxidized by the cathode active material present in the cores C1) of the coated particulate material E1).

Alternatively, in an electrode according to the third aspect described herein, the solid electrolyte material admixed to the coated particulate material according to the first aspect as disclosed above or provided by a process according to the second aspect as disclosed above may be a solid material having a composition which is also present in the coating C2) of the coated particulate material of the electrode. Applying a solid material having a composition which is also present in the coating C2) as the solid electrolyte in the electrode E2) reduces the diversity of materials present in the electrode, resulting in reduced complexity of the electrode and omission of undesirable interactions between the different materials present in the electrode. Moreover, presence of the same material in the coating C2) of the coated particulate and in the solid electrolyte E2) creates favorable conditions for the transfer of lithium ions between the electrode active material (which is present in the cores C1) of the coated particulate material) and the solid electrolyte.

In an electrode according to the third aspect as defined herein, a coated particulate material E1) according to the first aspect as disclosed above or provided by a process according to the second aspect as disclosed above and a solid electrolyte material E2) may be admixed with each other and with one or more binding agents E4) and/or with one or more electron-conducting materials E3). Typical electron-conducting materials E3) are those comprising or consisting of elemental carbon, e.g. carbon nanofibers, carbon nanotubes, graphene, carbon black, acetylene black, coke, and graphene oxide. Typical binding agents are poly(vinylidenefluroride) (PVDF), styrene-butadiene rubber (SBR), polyisobutene, poly(ethylene vinyl acetate) and poly(acrylonitrile butadiene).

An electrode according to the third aspect as defined herein may comprise a coated particulate material according to the first aspect as disclosed above or provided by a process according to the second aspect as disclosed above in a total amount of from 50 % to 99 %, more preferably of from 70 % to 97 %, relative to the total mass of the electrode (without current collector, here and hereafter).

An electrode according to the third aspect as defined herein may comprise a solid electrolyte in total amount of from 1 % to 50 %, more preferably of from 3 % to 30 %, relative to the total mass of the electrode.

Optionally, an electrode according to the third aspect as defined herein may comprise electron-conducting material comprising or consisting of elemental carbon in total amount from 0 % to 5%, more preferably from 0 % to 1 %, relative to the total mass of the electrode.

Optionally, an electrode according to the third aspect as defined herein may comprise binding agents in a total amount of from 0.1 % to 3 %, relative to the total mass of the electrode.

Preferred electrodes according to the third aspect as defined herein are those having one or more of the specific and preferred features disclosed herein.

The present invention also pertains to a method of making an electrode according to the third aspect as described above. Said method comprises the steps

M1) providing at least one coated particulate material E1) according to the first aspect or obtained by process according to the second aspect

M2) providing at least one solid electrolyte material E2)

M3) optionally providing on or both of further constituents E3) and E4) as defined above

M4) mechanically mixing the components provided in steps M1) to M3) with each other, optionally adding a solvent,

M5) compressing the mixed components obtained in step M4) at a pressure above atmospheric pressure, or coating the mixture obtained in step M4) onto a current collector with subsequent removal of a solvent if necessary

so that an electrode results.

The disclosure regarding coated particulate materials provided above in the context of the first and second aspect and the disclosure regarding the electrode according to the third aspect apply mutatis mutandis. Regarding preferred and specific coated particulate materials, reference is made to the disclosure provided above in the context of the coated particulate material according to the first aspect. Regarding preferred and specific electrode constituents E2), E3) and E4), reference is made to the disclosure provided above in the context of the electrode according to the third aspect.

In step M4), a composite comprising electrode constituents E1) and E2, and optionally one or both of E3) and E4) and optionally a solvent may be prepared by mechanical mixing, e.g. by means of a planetary mill or ball mill.

In step M5) of the method of making an electrode, the pressure above atmospheric pressure is preferably a pressure in the range of from 1 to 450 MPa, more preferably of from 50 to 450 MPa and yet more preferably of from 75 to 400 MPa.

The present invention also pertains to an electrode, obtainable by the method according to the fourth aspect as described above.

The present invention also pertains to the use of a coated particulate material according to the first aspect or prepared by the process according to the second aspect for preparing an electrode according to the third aspect as defined above. The disclosure regarding coated particulate materials provided above in the context of the first and second aspect and the disclosure regarding the electrode according to the third aspect apply mutatis mutandis. Regarding preferred and specific coated particulate materials, reference is made to the disclosure provided above in the context of the coated particulate material according to the first aspect.

According to a further aspect, there is provided an electrochemical cell comprising a coated particulate material according to the first aspect as disclosed above or provided by a process according to the second aspect as disclosed above.

In said cell, preferably the coated particulate material may be present in an electrode according to the third aspect as disclosed above, especially in a cathode.

The above-defined electrochemical cell may be a rechargeable electrochemical cell comprising the following constituents

α) at least one anode,

β) at least one cathode,

γ) at least one separator.

Electrochemical cells as described herein may be alkali metal containing cells, especially lithium-ion containing cells. In lithium-ion containing cells, the charge transport is effected by Li$^+$ ions. In the separator, such electrochemical cell may comprise a solid electrolyte selected from the group consisting of lithium-containing sulfides, lithium-containing oxysulfides, lithium-containing oxy-phosphates, lithium-containing thiophosphates, lithium argyrodites, lithium transition metal halides, and lithium-containing oxyphosphonitrides. Preferably, the solid electrolyte of the separator has the same composition like the solid electrolyte in the electrode E2), so that the diversity of materials present in the cell is reduced, resulting in reduced complexity of the cell and omission of undesirable interactions between the different materials present in the cell. Moreover, presence of the same material in the solid electrolyte E2) and the separator creates favorable conditions for the transfer of lithium ions between the electrode and the solid electrolyte in the separator.

Suitable separator materials, electrochemically active cathode materials (cathode active materials) and suitable electrochemically active anode materials (anode active materials) are known in the art. Exemplary cathode active materials are disclosed above in the context of the first aspect. Anode active materials are capable of reversibly plating and stripping lithium metal resp. de-intercalating and intercalating lithium ions. In an electrochemical cell as described herein the anode $\alpha$) may comprise graphitic carbon, lithium metal or a metal alloy comprising lithium as the anode active material.

The electrochemical cell may be an all-solid-state electrochemical cell.

In certain cases, an electrochemical cell according to the present invention comprises

- a cathode which is an electrode according to the third aspect as described above

- a separator layer comprising a solid electrolyte selected from the group consisting of lithium-containing sulfides, lithium-containing oxysulfides, lithium-containing oxy-phosphates, lithium-containing thiophosphates, lithium argyrodites, lithium transition metal halides, and lithium-containing oxyphosphonitrides,

- an anode comprising an anode active material capable of reversibly plating and stripping lithium metal resp. de-intercalating and intercalating lithium ions.

In said electrochemical cell, the coating C2) present in the coated particulate material according to the above-defined first aspect resp. obtained by the process according to the above-defined second aspect separates the cathode active material from the lithium ion-conducting separator layer. Since the cathode active material in the cores C1) is coated with a coating C2) as described in the above-defined first aspect resp. obtained by the process according to the above-defined second aspect, direct contact between the cathode active material and the lithium ion-conducting separator layer is prevented. Thus, coating the cathode active material in the cores C1) with a coating C2) as described in the above-defined first aspect resp. obtained by the process according to the above-defined second aspect, allows for implementing electrochemical cells, especially all-solid-state lithium batteries, wherein a cathode active material having a redox potential of 4 V or more vs. Li$^+$/Li is combined with a solid electrolyte E2) resp. with a separator layer comprising or consisting of a lithium ion-conducting material which as such does not exhibit oxidation stability at a redox potential of 4 V or more vs. Li$^+$/Li, e.g. a sulfide-based, thiophosphate-based or oxysulfide-based solid electrolyte. Such lithium ion-conducting materials which do not have high oxidation stability often exhibit one or more favorable properties like stability in the presence of lithium metal or of a metal alloy comprising lithium, easy processability, superior ionic conductivity and low cost which render them suitable for forming a solid electrolyte layer resp. a separator layer. Thus, the solid electrolyte for the separator layer may be suitably selected according to the criteria of stability in the presence of lithium metal or a metal alloy comprising lithium, ionic conductivity, processability and costs, while oxidation stability is not an issue.

Thus, coating the cathode active material with a coating C2) as described above in the context of the first aspect allows for implementing electrochemical cells, especially all-solid state lithium batteries, wherein a cathode active material having a redox potential of 4 V or more vs. Li$^+$/Li is combined with a solid electrolyte E2) and/or a separator layer comprising or consisting of a lithium ion-conducting material which as such does not exhibit oxidation stability at a redox potential of 4 V or more vs. Li$^+$/Li, e.g. sulfide-based solid electrolytes, but exhibits one or more favorable properties like stability in the presence of lithium metal or of a metal alloy comprising lithium and superior ionic conductivity, easy processability, which render said solid electrolyte suitable for forming a solid electrolyte layer resp. a separator layer.

The electrochemical cell may have a disc-like or a prismatic shape. The electrochemical cell can include a housing that can be made of steel or aluminum.

A plurality of electrochemical cells as described above may be combined to an all-solid-state battery, which has both solid electrodes and solid electrolytes. A further aspect of the present disclosure refers to batteries, more specifically to an alkali metal ion battery, in particular to a lithium ion battery comprising at least one electrochemical cell as described above, for example two or more electrochemical cells as described above. Electrochemical cells as described above can be combined with one another in alkali metal ion batteries, for example in series connection or in parallel connection. Series connection is preferred.

The electrochemical cells resp. batteries described herein can be used for making or operating cars, computers, personal digital assistants, mobile telephones, watches, camcorders, digital cameras, thermometers, calculators, laptop BIOS, communication equipment or remote car locks, and stationary applications such as energy storage devices for power plants. A further aspect of the present invention is a method of making or operating cars, computers, personal digital assistants, mobile telephones, watches, camcorders, digital cameras, thermometers, calculators, laptop BIOS, communication equipment, remote car locks, and stationary applications such as energy storage devices for power plants by employing at least one inventive battery or at least one inventive electrochemical cell.

A further aspect of the present disclosure is the use of the electrochemical cell as described above in motor vehicles, bicycles operated by electric motor, robots, aircraft (for example unmanned aerial vehicles including drones), ships or stationary energy stores.

The present disclosure further provides a device comprising at least one inventive electrochemical cell as described above. Preferred are mobile devices such as are vehicles, for example automobiles, bicycles, aircraft, or water vehicles such as boats or ships. Other examples of mobile devices are those which are portable, for example computers, especially laptops, telephones or electrical power tools, for example from the construction sector, especially drills, battery-driven screwdrivers or battery-driven tackers.

The invention is illustrated further by the following examples which are not limiting.

Examples

1. Material preparation

Step P1)

Core particles C1) comprising $LiNi_{0.85}Co_{0.10}Mn_{0.05}O_2$ (NCM-851005; BASF SE, herein also referred to as NCM) as the cathode active material (CAM) were heated in $O_2$ flow at 750 °C for 3 h to reduce the amount of residual surface carbonates. Heating and cooling rates were set to 5 °C/min.

A portion of the core particles remained uncoated and was used for comparison experiments (herein referred to as "uncoated").

Step P2)

1 M lithium ethoxide solution was prepared by the reaction of absolute ethanol (Sigma-Aldrich; 99.8%) with Li metal (Albemarle Germany GmbH).

Step P3)

To prepare 0.5 M niobium ethoxide and 0.01 M zinc acetate solutions, $Nb(OCH_2CH_3)_5$ (Sigma-Aldrich; 99.95%) and $Zn(O_2CCH_3)_2$ (Sigma-Aldrich) were dissolved in absolute ethanol.

Steps P4) - P6)

In an Ar-filled glovebox, a reaction mixture in the form of a dispersion was obtained by adding an amount of 5.94 g of the core particles provided in step P1) to a mixture of the lithium ethoxide solution (512 $\mu$L) prepared in step P2), and the niobium ethoxide solution (683 $\mu$L) and the zinc acetate solution (8500 $\mu$L) prepared in step P3), followed by 30 min ultrasonication of the dispersion (Step P4)). Subsequently, the reaction mixture was dried in a vacuum overnight (Step P5)). The resultant powder was ground using a mortar and pestle and heated in oxygen flow at 300 or 500 °C for 2 h in each case (5 °C/min heating rate) (Step P6)). Based on the applied amounts of Nb and Zn, the coated particles according to the invention obtained in this way shall have a nominal composition of $Li_6ZnNb_4O_{14}$ although it was found that the monoclinic phase $Li_6ZnNb_4O_{14}$ was not present (see below).

Referring to the temperature applied in step P6), the coated particulate material according to the invention are referred to as "coated-inv300", and "coated-inv500".

For comparison, coated particulate materials were prepared using a reaction mixture not comprising zinc acetate (not according to the invention).

A first coated particulate material not according to the invention ("coated-noninv1") was prepared as follows: In an Ar-filled glovebox, a reaction mixture in the form of a dispersion was obtained by adding an amount of 5.94 g of the NCM core particles provided in step P1) to a mixture of the lithium ethoxide solution (512 $\mu$L) prepared in step P2), the niobium ethoxide solution (683 $\mu$L) prepared in step P3), and 8500 $\mu$L anhydrous ethanol, followed by 30 min ultrasonication of the dispersion (Step P4)). Subsequently, the reaction mixture was dried in a vacuum overnight (Step P5)). The resultant powder was ground using a mortar and pestle and heated in oxygen flow at 300 °C for 2 h (5 °C/min heating rate) (Step P6)).

A second coated particulate material not according to the invention ("coated-noninv2") was prepared as follows: In an Ar-filled glovebox, a reaction mixture in the form of a dispersion was obtained by adding an amount of 5.94 g of the NCM core particles provided in step P1) to a mixture of the lithium ethoxide solution (1024 μL) prepared in step P2), the niobium ethoxide solution (683 μL) prepared in step P3), and 8500 μL anhydrous ethanol, followed by 30 min ultrasonication of the dispersion (Step P4)). Subsequently, the reaction mixture was dried in a vacuum overnight (Step P5)). The resultant powder was ground using a mortar and pestle and heated in oxygen flow at 300 °C for 2 h (5 °C/min heating rate) (Step P6)). Based on the applied amounts of Li and Nb in the coating of said particles the molar ratio Li:Nb is 3:1.

A third coated particulate material not according to the invention ("coated-noninv3") was prepared as follows: In an Ar-filled glovebox, a reaction mixture in the form of a dispersion was obtained by adding an amount of 5.94 g of the NCM core particles provided in step P1) to a mixture of the lithium ethoxide solution (406 μL) prepared in step P2), the niobium ethoxide solution (812 μL) prepared in step P3), and 1000 μL anhydrous ethanol, followed by 30 min ultrasonication of the dispersion (Step P4)). Subsequently, the reaction mixture was dried in a vacuum overnight (Step P5)). The resultant powder was ground using a mortar and pestle and heated in oxygen flow at 350 °C for 2 h (5 °C/min heating rate) (Step P6)). Based on the applied amounts of Li and Nb, in the coating of said particles the molar ratio Li:Nb is 1:1.

2. <u>Investigation of structure and chemical composition of the coated particulate material according to the invention</u>

Scanning electron microscopy analysis was carried out at an accelerating voltage of 10 kV using a LEO-1530 electron microscope (Carl Zeiss AG) with a field emission source. Scanning electron microscopy (SEM) images (not shown) of uncoated cathode active material prepared in step P1) and coated particulate material according to the invention as obtained after step P6) exhibit amounts of agglomerated coating material randomly distributed over the core particles of the coated particulate material according to the invention. The morphology of the core particles remained substantially unaltered. Both of these observations were made irrespective of the temperature of the heat treatment carried out in step P6).

Attenuated total reflection-infrared spectroscopy was carried out using an ALPHA FT-IR spectrometer (Bruker) equipped with a Ge crystal. By means of ATR-IR spectroscopy the presence of $Li_2CO_3$ in the uncoated core particles and the coated particulate material was verified with minor differences between the spectra (not shown) of the uncoated core particles and of the coated particulate material, irrespective of the temperature of the heat treatment carried out in step P6). This result indicates that some surface impurities from the synthesis remained and the carbonate content did not change much upon coating.

X-ray diffraction (XRD) was used to assess possible changes in the lattice structure of the coated particulate material relative to the uncoated core particles. XRD data were collected using a Stadi-P diffractometer (STOE) with a Mo anode (A = 0.70926 Å) and a MYTHEN 1K strip detector (Dectris) in Debye-Scherrer geometry. The instrumental contribution to the reflection broadening was obtained by measuring a NIST 640f Si standard reference material. Rietveld refinement was performed using GSAS-II. During refinement the scale factor, zero shift and crystallite size broadening parameters were allowed to vary. Sample absorption was calculated based on the capillary diameter of 0.3 mm and a powder packing density of 1.44 g/cm3. A Chebyshev polynomial function with 17 terms was used to fit a fixed background to the data. Unit cell parameters, oxygen site position and atomic displace parameters (isotropic, uiso) for each site were refined. Atoms occupying the same site were constrained to have the same atomic parameters, and site occupancy factors were constrained such that each site remained fully occupied. All reflections in the patterns (not shown) of the different samples irrespective of the temperature of the heat treatment carried out in step P6) could be indexed within the R-3m space group ($\alpha$-NaFeO$_2$-type structure), as expected for the NCM material present in the cores C1).

Transmission electron microscopy (TEM) was used to gain insights into the microstructure of the coating (not shown). TEM characterization was done using a double aberration corrected Themis-Z microscope (ThermoFisher Scientific) at an accelerating voltage of 300 kV equipped with an Oneview IS camera (Ametek), a Super-X EDX detector (ThermoFisher Scientific) and a high-resolution GIF Continuum 970 (Ametek) electron energy-loss spectrometer. 4D-STEM datasets were collected using the OneView IS camera with a screen current of ~10 pA, a small convergence semi-angle of 0.47 mrad and a camera length of 580 mm. Virtual imaging of the nano-beam electron diffraction (NBED) patterns was done using DigitalMicrograph (version 3.42). Sample cross-sections were prepared using a dual-beam focused Ga ion beam (FIB) in a Strata 400 (ThermoFisher Scientific). Carbon layers were deposited by ion beam-induced deposition to protect the coating during sample preparation and processing. Initial thinning was performed at 30 kV. Final thinning and cleaning of the samples were done at lower voltages of 5 kV/2 kV.

In a high-resolution TEM (HRTEM) image (not shown), a shell on the outer surface of an NCM-851005 particle can be recognized. The thickness of this shell ranges from a few nanometres to a few tens of nanometres and appears to be larger at the outward facing grain boundaries. The presence of uncoated surfaces is also conceivable.

In high-angle annular dark-field scanning TEM (HAADF-STEM) mode (not shown) a clear separation of core C1) and coating C2) was observed. Elemental maps of Nb and Ni obtained by energy-dispersive X-ray spectroscopy (EDS) of the surface region of a focused ion beam (FIB)-prepared particle cross-section coincide with the expected location of Ni in the core C1) and of Nb in the coating C2). Diffusion of Nb into the core C1) was not apparent, in agreement with expectations considering the size and charge of the Nb ions. The elemental map of Zn suggests its presence both in the coating C2) and in the core C1). However, given the minor Zn content, the EDS results are not unambiguous. This issue could not to be solved by electron energy-loss spectroscopy (EELS) either because of the overlap of the Ni L-edge (1008 eV) and the Zn L-edge (1020 eV) or/and the small amount of Zn relative to that of Ni. Consequently, elucidating the specific role of Zn in the coating requires further study.

Using nano-beam electron diffraction (NBED), the presence of crystalline species in an amorphous matrix was verified in the coatings C2) (not shown). Virtual dark-field images (not shown) exhibit a large number of nanoparticles having a cubic crystal lattice, unlike the monoclinic phase $Li_6ZnNb_4O_{14}$. The measured lattice spacings match well with those of rocksalt-type (*Fm-3m* space group) lithium niobium oxides, such as $Li_3NbO_4$ and related compounds. In addition, a broad reflection observed at low diffraction angles not indexable in the *Fm-3m* space group is most likely resulting from the presence of crystalline $Li_2CO_3$, which was observed by ATR-IR.

For elemental analysis, a sample of the coated particulate material was dissolved in acid using a graphite furnace. The Zn and Nb contents were determined by inductively coupled plasma-optical emission spectroscopy (ICP-OES) using a Thermo Fisher Scientific iCAP 7600 DUO. The carbon content was probed using a CS analyzer. Mass fractions represent the mean of at least three independent measurements. The Zn and Nb mass fractions were determined to be 0.077(1) and 0.50(1) wt%, respectively, slightly below the targeted values of 0.093 and 0.53 wt% (corresponding to 1 wt% of the compound $Li_6ZnNb_4O_{14}$). All mass fraction data are based on to the total mass of the plurality of core particles. The molar ratio of Nb:Zn $\approx$ 4.57 also deviates from the molar ratio of 4 in the compound $Li_6ZnNb_4O_{14}$.

3. Electrochemical investigations

Electrode preparation

A composite for the cathode was prepared by mixing

E1)   a coated particulate material (according to invention or not according to the invention, see item 1 above) or uncoated cathode active material

E2)   solid electrolyte $Li_6PS_5Cl$ (LPSCl; NEI Corp.)

E3)   Super C65 carbon black (Timcal)

in a ratio of 69:30:1 by mass in a planetary mill (Fritsch) at 140 rpm for 30 min.

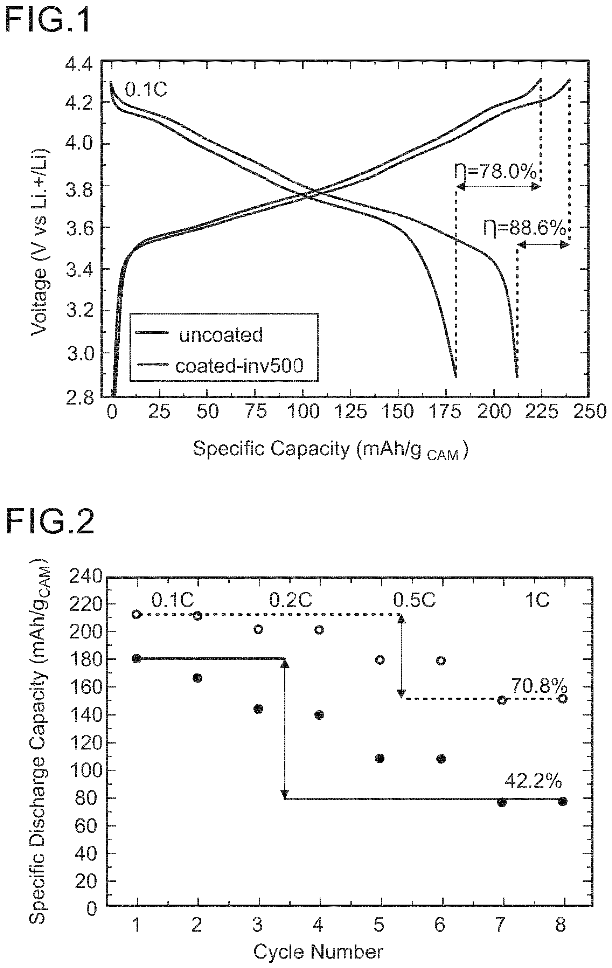

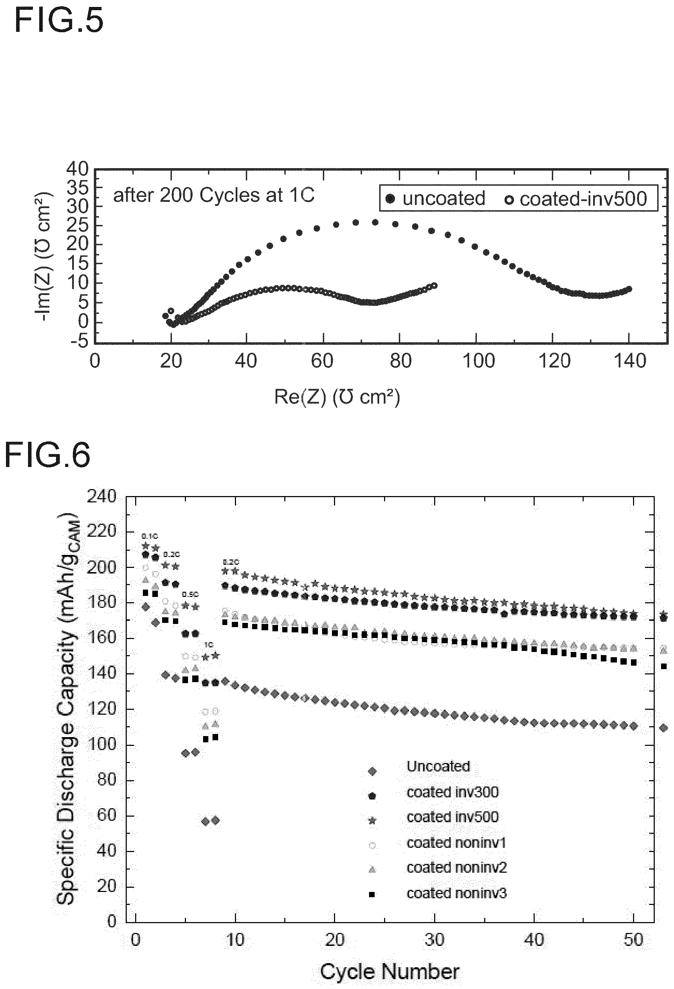

A composite for the anode was prepared by mixing carbon-coated $Li_4Ti_5O_{12}$ (LTO; NEI Corp.), $Li_6PS_5Cl$ and Super C65 carbon black in a ratio of 30:65:5 (figs. 1-5) resp. 30:60:10 (fig. 6) by mass in a planetary mill (Fritsch) at 140 rpm for 30 min.

Solid-state cell assembly and testing procedures

All-solid-state cells having different cathodes were tested using a customized setup comprising a polyether ether ketone sleeve and two stainless steel dies. Cells in the form of 10 mm diameter pellet stacks were prepared starting from the separator layer that was made by cold pressing 100 mg $Li_6PS_5Cl$ at a uniaxial pressure of 62 MPa. The cells were finished by adding 65 mg anode composite (see above) and 12 mg cathode composite (see above, ~2.9 mAh/cm$^2$, $q_{th}$ = 274 mAh/$g_{CAM}$) at the opposite surfaces of the cold-pressed solid electrolyte and pressing the stack at 437 MPa.

The cells were galvanostatically cycled at 45 °C in a voltage range between 2.9 and 4.3 V versus Li$^+$/Li while maintaining a uniaxial pressure of 81 MPa. Cycling stability tests were performed at a rate of 1C (1C = 190 mA/$g_{CAM}$) for 200 cycles. Rate performance tests were done at 0.1C, 0.2C, 0.5C and 1C, with two cycles at each C-rate. Results are averaged from at least three cells.

Electrochemical impedance spectroscopy was conducted on all solid state-cells after 200 cycles at frequencies from 7 MHz to 100 mHz, with an amplitude of 10 mV, using a VMP3 impedance analyzer (Bio-Logic Science Instruments Ltd.).

Results

Figure 1 shows first-cycle charge/discharge curves at 0.1C rate. The upper graph is an average charge/-discharge curve of three cells according to the invention (having a cathode comprising coated particulate material "coated-inv500". The lower graph is an average charge/discharge curve of three comparisons cells (having a cathode comprising the uncoated cathode active material ("uncoated")).

The cells according to the invention delivered a reversible specific discharge capacity of 210 mAh/$g_{CAM}$ (approx. 2.2 mAh/cm$^2$), compared to 180 mAh/$g_{CAM}$ for the comparison cells. It is assumed that the superior reversible specific discharge capacity of the cells according to the invention is enabled by superior kinetics and Coulombic efficiency. The voltage profile reveals improved delithiation of coated cathode active material "coated inv500", resulting in a larger capacity than for the uncoated counterpart. The difference in Coulombic efficiency (88.6% vs 78.0% for the cells according to the invention and the comparison cells, respectively) suggests that more severe interfacial side reactions (oxidation of the solid electrolyte material) occurred in the case of uncoated cathode active material. This may explain the strongly reduced overpotential observed for the cell according to the invention, since it is known in the art that build-up of resistance may result from detrimental reactions between the electrode constituents during cycling.

Figure 2 shows the average specific discharge capacities for rates ranging from 0.1C to 1C for the three cells according to the invention (upper lines and dots) and of the three the comparison cells (lower lines and dots) as defined above. The rate capability of the cells according to the invention was clearly better than that of the comparison cells. At a rate of 1C (~2 mA/cm$^2$), a specific discharge capacity of about 150 mAh/$g_{CAM}$ was achieved with the cells according to the invention, corresponding to 71% of the initial capacity at 0.1C. In contrast, the comparison cells delivered a specific discharge capacity of about 76 mAh/$g_{CAM}$, corresponding to only 42% of the initial capacity. These results emphasize the improved charge-transfer kinetics through the modified interface between the cathode active material and the solid electrolyte in the cell according to the invention.

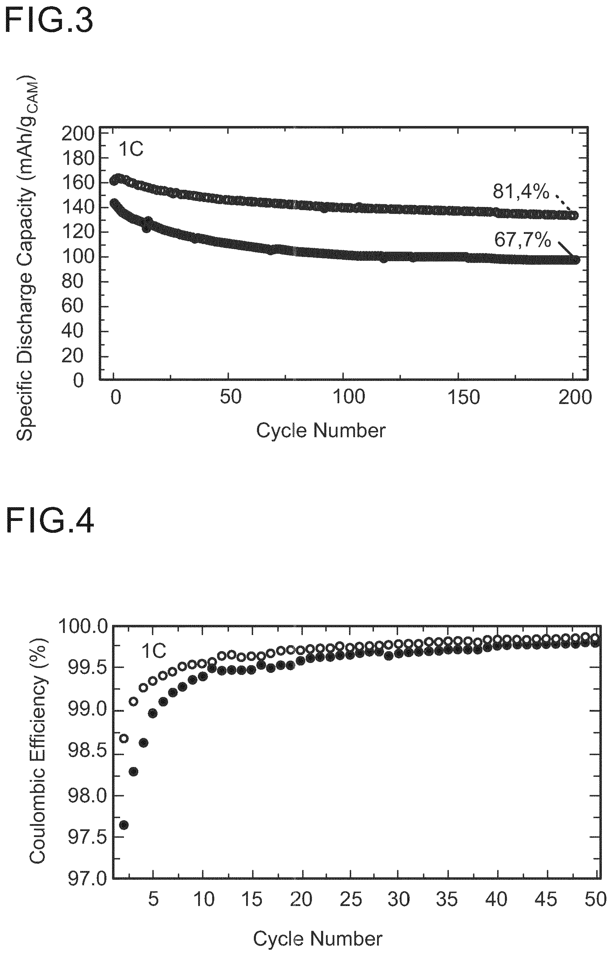

Figure 3 illustrates the average long-term cycling stability of the three cells according to the invention (upper graph) and the three comparison cells (lower graph) as defined above. As expected from the rate performance data shown in Figure 2, the cells according to the invention delivered larger specific capacities. While the comparison cells showed rapid capacity fading over the first 20 cycles, the capacity degradation of the cells according to the invention was found to occur more gradually. Notably, more than 81% of the initial discharge capacity was retained after 200 cycles, compared to 68% for the comparison cells, despite the much larger cumulative charge exchanged in the cells according to the invention.

Figure 4 shows the average Coulombic efficiencies up to cycle number 50 of the three cells according to the invention (upper graph) and the three comparison cells (lower graph) as defined above. The cells according to the invention exhibited higher values throughout, with the difference being particularly significant over the first 20 cycles. This suggests faster formation of a stable interface between the cathode active material and the solid electrolyte in the cells according to the invention. Both cathode active materials (uncoated and "coated inv500") stabilized at Coulombic efficiencies of $\eta$ > 99.9% after about 60 cycles.

Finally, after 200 cycles a representative cell according to the invention and a representative comparison cell as defined above were examined by electrochemical impedance spectroscopy (EIS) and scanning electron microscopy (SEM). Figure 5 shows Nyquist plots from EIS measurements conducted on representative cells in the discharged state. Semi-quantitative comparison of the depressed semicircles representing the interfacial cathode resistance indicated that this contribution is reduced by a factor of about two in the cell according to the invention (smaller semicircle). This finding corroborates the differences in Coulombic efficiency discussed above. Cross sectional SEM images (not shown) revealed no signs of major (chemo)mechanical degradation (contact loss, particle fracture etc.), for the cell according to the invention as well as for the comparison cell. This implies that the differences in cycling performance mainly arise from a different degree of (electro)chemical decomposition at the interface between the cathode active material and the solid electrolyte.

Figure 6 illustrates the average long-term cycling stability of cells comprising six different cathode active materials (for preparation and composition details, see section 1 above), namely

"Uncoated"

"coated inv500"

"coated inv300"

"coated noninv1"

"coated noninv2"

"coated noninv3"

The cells are cycled at different charge/discharge rates (as denoted in the graphs): 1C, 0.2C, 0.5C, 1C (2 charge/discharge cycles each); followed by 0.2C from the 9th cycle onwards.

Best results were obtained with cells according to the invention containing the cathode active material "coated inv500", while the cells according to the invention containing the cathode active material "coated inv300" delivered slightly lower specific discharge capacities. While the comparison cells with the uncoated cathode active material showed rapid capacity fading over the first 10 cycles, the capacity degradation of the cells according to the invention was found to occur more gradually. The comparison cells having a cathode comprising any of the three coated particulate materials "coated noninv1", "coated noninv2" and coated noninv3" are still favorable relative to the comparison cell with the uncoated cathode active material, but nevertheless exhibit lower specific discharge capacities and a faster capacity degradation than the cells according to the invention.

**Claims**

1. A coated particulate material, comprising

    C1) a plurality of core particles, each core particle comprising one or more compounds of formula (I):

    $$Li_{1+t}[Co_xMn_yNi_zM_u]_{1-t}O_2 \qquad (I)$$

    wherein

    $$0 \leq x \leq 1$$

    $$0 \leq y \leq 1$$

    $$0 \leq z \leq 1$$

    $$0 \leq u \leq 0.15$$

    M if present is one or more elements selected from the group consisting of Al, Mg, Ba, B, and transition metals other than Ni, Co, and Mn,

    $$x + y + z > 0$$

    $$x + y + z + u = 1$$

    $$0 \leq t \leq 0.2$$

    and
    C2) disposed on the surfaces of the core particles, a coating comprising

        - carbonate anions,
        - lithium cations, and
        - niobium and zinc in oxidized form, wherein at least a part of the niobium is present as cubic $Li_3NbO_4$ having a crystallographic unit cell of space group *Fm-3m*

    wherein

        - the fraction of Zn is in the range of from 0.07 mass-% to 0.1 mass-%
        - the fraction of Nb is in the range of from 0.4 mass-% to 0.6 mass-%
        - the coating comprises carbonate anions in a total amount in the range of from 0.08 mass-% to 1.62 mass-%

    in each case relative to the total mass of the plurality of core particles

        - the molar ratio of Li:Nb in the coating is in the range of from 0.5 to 5.0.

2. Coated particulate material according to claim 1, wherein in the coating at least a part of the zinc is present in a compound having a composition derived from the parent composition $Li_3NbO_4$ or $LiNbO_3$ wherein Li and/or Nb are partially substituted by Zn.

3. Coated particulate material according to claim 1 or 2, wherein
the coating comprises

- at least one crystalline phase comprising cubic $Li_3NbO_4$ having a crystallographic unit cell of space group *Fm-3m*
- at least one of a crystalline phase and an amorphous phase comprising lithium carbonate.

4. Coated particulate material according to any preceding claim, wherein

- the molar ratio Nb:Zn is in the range of from 3 to 5.

5. Coated particulate material according to any preceding claim, wherein the monoclinic phase $Li_6ZnNb_4O_{14}$ is not present in the coated particulate material.

6. Coated particulate material according to any preceding claim, wherein the coating comprises carbonate anions in a total amount in the range of from 0.122 mass-% to 1.22 mass-%, preferably of from $\geq$ 0.162 mass-% to 0.812 mass-% relative to the total mass of the plurality of core particles.

7. Coated particulate material according to any preceding claim, wherein

- at least a part of the carbonate ions, preferably the total amount of carbonate ions in the coating is present as lithium carbonate.

8. Coated particulate material according to any preceding claim, wherein

- the coating comprises lithium carbonate, preferably in a total amount in the range of from 0.1 mass-% to 2.0 mass-%, more preferably of from $\geq$ 0.15 mass-% to 1.5 mass-%, yet more preferably of from $\geq$ 0.15 mass-% to 1.0 mass-%, relative to the total mass of the plurality of core particles;
and/or
- the molar ratio of Li:Nb in the coating is in the range of from 0.75 to 4.5, preferably of from 1.0 to 4.0,
and/or
- the molar amount of Nb in the coating per g of the plurality of core particles is in the range of from 6 to 540 $\mu$mol/g, preferably of from 6 to 270 $\mu$mol/g, more preferably of from 6 to 108 $\mu$mol/g, relative to the total mass of the plurality of core particles.

9. Electrode for use in a solid-state lithium-ion electrochemical cell and/or in an all-solid-state lithium-ion electrochemical cell, comprising

E1) a coated particulate material as defined in any of claims 1 to 8, preferably in a total amount of from 50 mass-% to 99 mass-%, more preferably of from 70 mass-% to 97 mass-%, relative to the total mass of the electrode,

E2) a lithium ion-conducting solid electrolyte material, preferably in a total amount of from 1 mass-% to 50 mass-%, more preferably of from 3 mass-% to 30 mass-%, relative to the total mass of the electrode,

E3) optionally electron-conductive carbon, preferably selected from the group consisting of carbon nanofibers, carbon nanotubes, graphene, carbon black, acetylene black, coke, and graphene oxide,

E4) optionally one or more binding agents.

10. Electrode according to claim 9, wherein said solid electrolyte E2) is selected from the group consisting of lithium-containing sulfides, lithium-containing oxysulfides, lithium-containing oxyphosphates, lithium-containing thiophosphates, lithium argyrodites, lithium transition metal halides, and lithium-containing oxyphosphonitrides.

11. Process for preparing a coated particulate material as defined in any of claims 1 to 8, comprising the steps

P1) preparing or providing a plurality of core particles C1) as defined in claim 1,

(continued)

P2) preparing or providing a liquid composition comprising a solvent and, at least partially dissolved in said solvent, lithium ions,

P3) preparing or providing a liquid composition comprising a solvent and, at least partially dissolved in said organic solvent, zinc ions, and a liquid composition comprising an organic solvent and, at least partially dissolved in said organic solvent, niobium ions, or a liquid composition comprising an organic solvent and, at least partially dissolved in said organic solvent, zinc ions and niobium ions,

P4) contacting the components prepared or provided in steps P1) to P3) with each other, so that a reaction mixture results,

P5) removing the solvents from the reaction mixture resulting from step P4), so that a solid residue results, and

P6) heat-treating the solid residue resulting from step P5) at a temperature in the range of from 100 °C to 600 °C, preferably of from 250 °C to 550 °C, so that a coated particulate material as defined in any of claims 1 to 8 results.

12. Process according to claim 11, wherein

- in step P2) the liquid composition is prepared by dissolving lithium metal in ethanol
and/or
- in step P3) one or two liquid compositions are prepared by dissolving niobium ethoxide and zinc acetate in ethanol
and/or
- step P4) contacting comprises (i) preparation of a dispersion comprising the particles prepared or provided in step P1) and the liquid compositions prepared or provided in steps P2) and P3), and (ii) ultrasonic treatment of said dispersion
and/or
- in step P5) removal of the solvents comprises application of reduced pressure relative to standard pressure 101.325 kPa
and/or
- in step P6) the heat-treating is carried out in the presence of an oxygen flow.

13. An electrochemical cell comprising a coated particulate material as defined in any of claims 1 to 8 or an electrode as defined in any of claims 9 and 10.

14. Electrochemical cell according to claim 13, wherein said electrochemical cell comprises a solid electrolyte selected from the group consisting of lithium-containing sulfides, lithium-containing oxysulfides, lithium-containing oxy-phosphates, lithium-containing thiophosphates, lithium argyrodites, lithium transition metal halides, and lithium-containing oxyphosphonitrides.

15. Use of a coated particulate material according to any of claims 1 to 8 for preparing an electrode as defined in any of claims 9 and 10.

**Patentansprüche**

1. Ein beschichtetes Partikelmaterial, bestehend aus

C1) eine Vielzahl von Kernteilchen, wobei jedes Kernteilchen besteht aus eine oder mehrere Verbindungen der Formel (I):

$$Li_{1+t}[Co_xMn_yNi_zM_u]_{1-t}O_2 \qquad (I)$$

wobei

$$0 \leq x \leq 1$$

$$0 \leq y \leq 1$$

$$0 \leq z \leq 1$$

$$0 \leq du \leq 0{,}15$$

M, falls vorhanden, ist eines oder mehrere Elemente, die aus der Gruppe aus Al, Mg, Ba, B und Übergangsmetallen außer Ni, Co und Mn ausgewählt werden,

$$x + y + z > 0$$

$$x + y + z + u = 1$$

$$0 \leq t \leq 0{,}2$$

und
C2) auf den Oberflächen der Kernpartikel wird eine Beschichtung mit

- Carbonatanionen,
- Lithiumkationen, und
- Niobium und Zink in oxidierter Form, wobei mindestens ein Teil des Niobs als kubisches $Li_3NbO_4$ vorhanden ist, das eine kristallographische Einheitszelle der Raumgruppe *Fm-3m besitzt.*

wobei

- der Bruchteil von Zn liegt im Bereich von 0,07 Mass-% bis 0,1 Mass-%
- der Bruchteil von Nb liegt im Bereich von 0,4 Masse-% bis 0,6 Masse-%
- Die Beschichtung besteht aus Karbonat Anionen in einer Gesamtmenge im Bereich von 0,08 Masse-% bis 1,62 Masse-%

in jedem Fall relativ zur Gesamtmasse der Pluralität der Kernteilchen

- Das Molarverhältnis von Li:Nb in der Beschichtung liegt im Bereich von 0,5 bis 5,0.

2. Beschichtetes Partikelmaterial gemäß Anspruch 1, bei dem in der Beschichtung mindestens ein Teil des Zinks in einer Verbindung vorhanden ist, deren Zusammensetzung von der Mutterzusammensetzung $Li_3NbO_4$ oder $LiNbO_3$ abgeleitet ist, wobei Li und/oder Nb teilweise durch Zn ersetzt werden.

3. Beschichtetes Partikelmaterial gemäß Anspruch 1 oder 2, wobei Die Beschichtung besteht aus

- mindestens eine kristalline Phase, bestehend aus kubischem $Li_3NbO_4$ mit einer kristallographischen Einheits-zelle der Raumgruppe *Fm-3m*
- mindestens eine aus einer kristallinen und einer amorphen Phase, die aus Lithiumcarbonat besteht.

4. Beschichtete Partikelmaterialien gemäß einer beliebigen vorherigen Behauptung, wobei

- das Molarverhältnis Nb:Zn liegt im Bereich von 3 bis 5.

5. Beschichtetes Partikelmaterial gemäß einer vorherigen Behauptung, wobei die monokline Phase $Li_6ZnNb_4O_{14}$ im beschichteten Partikelmaterial nicht vorhanden ist.

6. Beschichtetes Partikelmaterial gemäß jeder vorherigen Behauptung, wobei die Beschichtung aus Karbonatanionen in einer Gesamtmenge im Bereich von 0,122 Massenprozent bis 1,22 Massenprozent, vorzugsweise von $\geq$ 0,162 Massenprozent bis 0,812 Massenprozent relativ zur Gesamtmasse der Mehrheit der Kernteilchen.

7. Beschichtetes Partikelmaterial gemäß jeder vorherigen Behauptung, wobei

   - Mindestens ein Teil der Karbonationen, vorzugsweise die Gesamtmenge an Karbonationen in der Beschichtung, ist als Lithiumcarbonat vorhanden.

8. Beschichtete Partikelmaterialien gemäß einer beliebigen vorherigen Behauptung, wobei

   - Die Beschichtung besteht aus Lithiumcarbonat, vorzugsweise in einer Gesamtmenge im Bereich von 0,1 Massenprozent bis 2,0 Massenprozent, vorzugsweise zwischen ≥ 0,15 Massenprozent und 1,5 Massenprozent, vorzugsweise von ≥ 0,15 Massenprozent bis 1,0 Massenprozent im Verhältnis zur Gesamtmasse der Kernpartikel;
   und/oder
   - das Molarverhältnis von Li:Nb in der Beschichtung liegt im Bereich von 0,75 bis 4,5, vorzugsweise von 1,0 bis 4,0.
   und/oder
   - die molare Menge Nb in der Schicht pro g der Mehrzahl der Kernpartikel liegt im Bereich von 6 bis 540 $\mu$mol/g, vorzugsweise von 6 bis 270 $\mu$mol/g, vorzugsweise von 6 bis 108 $\mu$mol/g relativ zur Gesamtmasse der Kernpartikel.

9. Elektrode für den Einsatz in einer Festkörper-Lithium-Ionen-elektrochemischen Zelle und/oder in einer reinen Festkörper-Lithium-Ionen-elektrochemischen Zelle, bestehend aus

   E1) Ein beschichtetes Partikelmaterial, wie es in einem der Ansprüche 1 bis 8 definiert ist, vorzugsweise in einer Gesamtmenge von 50 Massenprozent bis 99 Massenprozent, mehr vorzugsweise von 70 Massenprozent bis 97 Massenprozent relativ zur Gesamtmasse der Elektrode,

   E2) ein Lithium-Ionenleitende Festelektrolytmaterial, vorzugsweise in einer Gesamtmenge von 1 Massenprozent bis 50 Massenprozent, vorzugsweise von 3 Massenprozent bis 30 Massenprozent relativ zur Gesamtmasse der Elektrode,

   E3) optional elektronenleitender Kohlenstoff, vorzugsweise aus der Gruppe ausgewählt, die aus Kohlenstoffnanofasern, Kohlenstoffnanoröhren, Graphen, Schwarzkohle, Acetylenschwarz, Koks und Graphenoxid besteht,

   E4) optional ein oder mehrere Bindemittel.

10. Die Elektrode gemäß Anspruch 9, wobei der besagte feste Elektrolyt E2) aus der Gruppe ausgewählt wird, die aus lithiumhaltigen Sulfiden, lithiumhaltigen Oxysulfiden, lithiumhaltigen Oxyphosphaten, lithiumhaltigen Thiophosphaten, Lithiumargyroditen, Lithium-Übergangsmetallhalogeniden und lithiumhaltigen Oxyphosphonitriden besteht.

11. Verfahren zur Herstellung eines beschichteten Partikelmaterials, wie in einem der Ansprüche 1 bis 8 definiert, bestehend aus den folgenden Schritten

   P1) Vorbereitung oder Bereitstellung einer Pluralität von Kernteilchen C1) wie in Anspruch 1 definiert,

   P2) Herstellung oder Bereitstellung einer flüssigen Zusammensetzung, die aus einem Lösungsmittel besteht und, zumindest teilweise in diesem Lösungsmittel gelöste Lithiumionen, besteht,

   P3) Herstellung oder Bereitstellung einer flüssigen Zusammensetzung, die aus einem Lösungsmittel besteht und, zumindest teilweise gelöst in diesem organischen Lösungsmittel, Zinkionen sowie einer flüssigen Zusammensetzung, die aus einem organischen Lösungsmittel besteht und zumindest teilweise in diesem organischen Lösungsmittel gelöst ist, Niobionen oder einer flüssigen Zusammensetzung, die aus einem organischen Lösungsmittel besteht und zumindest teilweise in diesem organischen Lösungsmittel gelöst ist, Zinkionen und Niobiionen,

   P4) wobei die in den Schritten P1) bis P3) vorbereiteten oder bereitgestellten Komponenten miteinander in Kontakt treten, sodass eine Reaktionsmischung entsteht,

   P5) wobei die Lösungsmittel aus dem Reaktionsgemisch entfernt werden, das aus Schritt P4 entsteht), sodass ein fester Rückstand entsteht,

   und

(continued)

S. 6) Wärmebehandlung des festen Rückstands, der aus Schritt P5 resultiert) bei einer Temperatur im Bereich von 100 °C bis 600 °C, vorzugsweise von 250 °C bis 550 °C, sodass ein beschichtetes Partikelmaterial wie in jedem der Ansprüche 1 bis 8 definiert entsteht.

12. Verfahren gemäß Anspruch 11, wobei

- in Schritt P2) wird die flüssige Zusammensetzung durch Auflösung von Lithiummetall in Ethanol hergestellt und/oder
- in Schritt P3) werden eine oder zwei flüssige Zusammensetzungen durch Auflösung von Niobethoxid und Zinkacetat in Ethanol hergestellt und/oder
- Schritt P4) Kontaktaufnahme umfasst (i) die Herstellung einer Dispersion, die die in Schritt P1 hergestellten oder bereitgestellten Partikel und die in den Schritten P2 und P3 hergestellten oder bereitgestellten flüssigen Zusammensetzungen umfasst, sowie (ii) die Ultraschallbehandlung dieser Dispersion und/oder
- in Schritt P5) umfasst die Entfernung der Lösungsmittel die Anwendung eines reduzierten Drucks im Vergleich zum Standarddruck von 101,325 kPa und/oder
- in Schritt P6) erfolgt die Wärmebehandlung in Anwesenheit eines Sauerstoffflusses.

13. Eine elektrochemische Zelle, die aus einem beschichteten, partikelartigen Material besteht, wie es in einem der Ansprüche 1 bis 8 definiert ist, oder einer Elektrode, wie sie in einem der Ansprüche 9 und 10 definiert ist.

14. Elektrochemische Zelle gemäß Anspruch 13, wobei diese elektrochemische Zelle aus einem festen Elektrolyten besteht, der aus der Gruppe besteht, die aus lithiumhaltigen Sulfiden, lithiumhaltigen Oxysulfiden, lithiumhaltigen Oxyphosphaten, lithiumhaltigen Thiophosphaten, Lithium-Argyroditen, Lithium-Übergangsmetallhalogeniden und lithiumhaltigen Oxyphosphonitriden ausgewählt wird.

15. Verwendung eines beschichteten Partikelmaterials gemäß einer der Ansprüche 1 bis 8 zur Herstellung einer Elektrode, wie sie in den Forderungen 9 und 10 definiert ist.

**Revendications**

1. Un matériau particulaire revêtu, composé de

C1) une pluralité de particules de noyau, chaque particule de noyau comprenant un ou plusieurs composés de formule (I) :

$$Li_{1+t}[Co_xMn_yNi_zM_u]_{1-t}O_2 \qquad (I)$$

où

$$0 \leq x \leq 1$$

$$0 \leq y \leq 1$$

$$0 \leq z \leq 1$$

$$0 \leq u \leq 0,15$$

M, si présent, est un ou plusieurs éléments sélectionnés du groupe constitué d'Al, Mg, Ba, B et de métaux de transition autres que Ni, Co et Mn,

$$x + y + z > 0$$

$$x + y + z + u = 1$$

$$0 \leq t \leq 0,2$$

et

C2) disposé sur les surfaces des particules centrales, un revêtement comprenant

- anions carbonatés,
- cations de lithium, et
- niobium et zinc sous forme oxydée, où au moins une partie du niobium est présente sous forme cubique de $Li_3NbO_4$ possédant une cellule unité cristallographique du groupe spatial *Fm-3m*

où

- la fraction de Zn se situe dans la fourchette de 0,07 % de masse à 0,1 % de masse
- la fraction de Nb est dans la plage de 0,4 % de masse à 0,6 % de masse
- Le revêtement comprend carbonate les anions dans une quantité totale allant de 0,08 % de masse à 1,62 % de masse

dans chaque cas par rapport à la masse totale de la pluralité des particules du noyau

- le rapport molaire de Li:Nb dans le revêtement est dans la plage de 0,5 à 5,0.

**2.** Matière particulaire revêtue selon la revendication 1, dans laquelle dans le revêtement au moins une partie du zinc est présente dans un composé dont la composition est dérivée de la composition parente $Li_3NbO_4$ ou $LiNbO_3$, dans laquelle Li et/ou Nb sont partiellement remplacés par Zn.

**3.** Matière particulaire recouverte selon la revendication 1 ou 2, dans laquelle Le revêtement comprend

- au moins une phase cristalline composée de $Li_3NbO_4$ cubique possédant une cellule unité cristallographique du groupe spatial *Fm-3m*
- au moins une de phase cristalline et une phase amorphe composée de carbonate de lithium.

**4.** Matière particulaire recouverte selon toute revendication précédente, dans laquelle

- le rapport molaire Nb :Zn est de 3 à 5.

**5.** Matière particulaire revêtue selon toute affirmation précédente, où la phase monoclinique $Li_6ZnNb_4O_{14}$ n'est pas présente dans la matière particulaire recouverte.

**6.** Matière particulaire recouverte selon toute revendication précédente, où le revêtement comprend anions carbonatés dans une quantité totale allant de 0,122 % de masse à 1,22 %, de préférence de $\geq$ 0,162 % de masse à 0,812 % de masse par rapport à la masse totale de la pluralité de particules du noyau.

**7.** Matière particulaire recouverte selon toute revendication précédente, où

- au moins une partie des ions carbonate, de préférence la quantité totale d'ions carbonate dans le revêtement, est présente sous forme de carbonate de lithium.

**8.** Matière particulaire recouverte selon toute revendication précédente, dans laquelle

- Le revêtement est composé de carbonate de lithium, de préférence en quantité totale allant de 0,1 % à 2,0 %, de préférence entre $\geq$ 0,15 % de masse et 1,5 %, mais de préférence $\geq$ entre 0,15 % et 1,0 % de masse par rapport à la masse totale de la pluralité de particules ;

et/ou
- le rapport molaire Li :Nb dans le revêtement est de 0,75 à 4,5, de préférence de 1,0 à 4,0,
et/ou
- la quantité molaire de Nb dans le revêtement par g de la pluralité des particules du noyau est comprise entre 6 et 540 μmol/g, de préférence entre 6 et 270 μmol/g, et de préférence entre 6 et 108 μmol/g, par rapport à la masse totale de la pluralité des particules du noyau.

9. Électrode destinée à une cellule électrochimique lithium-ion à l'état solide et/ou dans une cellule électrochimique lithium-ion à état solide, comprenant

    E1)    un matériau particulaire revêtu tel que défini dans l'une des revendications 1 à 8, de préférence dans une quantité totale de 50 % à 99 % de masse, de préférence entre 70 % et 97 % de masse par rapport à la masse totale de l'electrode,

    E2)    un matériau électrolytique solide conducteur d'ions lithium, de préférence dans une quantité totale de 1 % à 50 % de masse, de préférence entre 3 % et 30 % en masse par rapport à la masse totale de l'electrode,

    E3)    éventuellement du carbone conducteur d'electrons, de préférence sélectionné parmi le groupe composé de nanofibres de carbone, nanotubes de carbone, graphène, noir de carbone, noir d'acétylène, coke et oxyde de graphène,

    E4)    éventuellement, un ou plusieurs agents liants.

10. Électrode selon la revendication 9, dans laquelle ledit électrolyte solide E2) est sélectionnée parmi le groupe composé de sulfures contenant du lithium, des oxysulfures contenant du lithium, des oxyphosphates contenant du lithium, des thiophosphates contenant du lithium, des argyrodites de lithium, des halogénures de métaux de transition de lithium et des oxyphosphonitrures contenant du lithium.

11. Procédé de préparation d'un matériau particulaire revêtu tel que défini dans l'une des revendications 1 à 8, comprenant les étapes suivantes

    P1)    préparant ou fournissant une pluralité de particules de noyau C1) telles que définies dans l'affirmation 1,

    P2)    préparer ou fournir une composition liquide composée d'un solvant et, au moins partiellement dissous dans ce solvant, des ions lithium,

    P3)    Préparer ou fournir une composition liquide comprenant un solvant et, au moins partiellement dissous dans ce solvant organique, des ions zinc, et une composition liquide comprenant un solvant organique et, au moins partiellement dissous dans ce solvant organique, des ions niobium, ou une composition liquide comprenant un solvant organique et, au moins partiellement dissous dans ce solvant organique, ions zinc et ions niobium,

    P4)    en contactant les composants préparés ou fournis aux étapes P1) à P3) entre eux, de sorte qu'un mélange de réaction résulte,

    P5)    retirant les solvants du mélange réactionnel résultant de l'étape P4), de sorte qu'un résidu solide en résulte,
    et

    P6)    traitement thermique du résidu solide résultant de l'étape P5) à une température comprise entre 100 °C et 600 °C, de préférence entre 250 °C et 550 °C, de sorte qu'un matériau particulaire recouvert tel que défini dans l'une des revendications 1 à 8 en résulte.

12. Procédure selon la revendication 11, dans laquelle

    - à l'étape P2), la composition liquide est préparée en dissolvant du lithium métallique dans de l'éthanol
    et/ou
    - à l'étape P3), une ou deux compositions liquides sont préparées en dissolvant de l'éthanoxyde de niobium et de l'acétate de zinc dans de l'éthanol
    et/ou
    - l'étape P4) le contact comprend (i) la préparation d'une dispersion comprenant les particules préparées ou fournies à l'étape P1) et les compositions liquides préparées ou fournies aux étapes P2) et P3), et (ii) le traitement ultrasonore de cette dispersion

et/ou

- à l'étape P5), l'élimination des solvants consiste à appliquer une pression réduite par rapport à la pression standard de 101,325 kPa

et/ou

- à l'étape P6), le traitement thermique est effectué en présence d'un flux d'oxygène.

13. Une cellule électrochimique composée d'un matériau particulaire revêtu tel que défini dans l'une des revendications 1 à 8 ou une électrode telle que définie dans l'une des revendications 9 et 10.

14. Pile électrochimique selon la revendication 13, dans laquelle ladite cellule électrochimique comprend un électrolyte solide sélectionné parmi le groupe composé de sulfures contenant du lithium, d'oxysulfures contenant du lithium, d'oxy-phosphates contenant du lithium, de thiophosphates contenant du lithium, des argyrodites de lithium, des halogénures de métaux de transition de lithium et des oxyphosphonitrures contenant du lithium.

15. Utilisation d'un matériau particulaire recouvert selon l'une des revendications 1 à 8 pour préparer une électrode telle que définie dans l'une des revendications 9 et 10.

## FIG.1

## FIG.2

# FIG.3

# FIG.4

# FIG.5

# FIG.6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020249659 A1
- WO 2020249659 A
- US 20200388841 A1